# EUROPÄISCHE PATENTSCHRIFT

(11) **EP 0 936 261 B1**
(45) Veröffentlichungstag und Bekanntmachung des Hinweises auf die Patenterteilung: **22.09.2004**
(21) Anmeldenummer: 99100926.7
(22) Anmeldetag: 20.01.1999
(51) Int. Cl.: C09D 167/00, C09D 163/00, C09D 5/03, C08K 5/13

(54) **Wärmehärtbare Beschichtungsmasse**
Heat-curable coating compositions
Compositions de revêtement thermodurcissables

(30) Priorität: 16.02.1998 DE 19806284
(43) Veröffentlichungstag der Anmeldung: 18.08.1999
(73) Patentinhaber: EMS-INVENTA AG, 8002 Zürich (CH)
(72) Erfinder: Kaplan, Andreas, Dr. rer. nat., 7000 Chur (CH); Wenzler, Manfred, 7013 Domat/Ems (CH); Heinz, Jürg, 7000 Chur (CH)
(74) Vertreter: Pfenning, Meinig & Partner

(56) Entgegenhaltungen:
- EP-A- 0 664 325
- EP-A- 0 816 442

## Beschreibung

Die vorliegende Erfindung betrifft wärmehärtbare Beschichtungsmassen, auch Pulverlacke genannt, bestehend aus
einem carboxylfunktionellem Polyester, und einem Epoxidharz und einem speziellen Stabilisator.

Pulverlacke, die als Bindemittel carboxylfunktionelle Polyester und Epoxidharze auf Basis Bisphenol A und Epichlorhydrin enthalten, sogenannte Hybrid-Pulverlacke, sind bereits seit längerem bekannt, siehe z.B. T.A. Misev: Powder Coatings (Chemistry and Technology), 1991 und David A. Bates: The Sciences of Powder Coatings, 1990.

Pulverlacke auf Basis von carboxylfunktionellen Polyestern und Epoxidharzen auf Basis von Bisphenol A und Epichlorhydrin besitzen hervorragende mechanische Eigenschaften, jedoch nur eine geringe Witterungsstäbilität und sind daher für den Einsatz im Aussenbereich nicht geeignet.

Ein Nachteil von Pulverlacken, die als Bindemittel carboxylfunktionelle Polyester und Epoxidharze auf Basis Bisphenol A und Epichlorhydrin enthalten, ist weiter die geringere Vergilbungsbeständigkeit in direkt gas- und/oder ölbeheizten Oefen im Vergleich zu elektrisch beheizten Oefen. Bei direkt gas- und/oder ölbeheizten Oefen sind die beschichteten Teile während des Härtungsvorganges in direktem Kontakt mit den Verbrennungsgasen der gas- und/oder ölbeheizten Brenner. Dies führt bei Pulverlacken, die als Bindemittel carboxylfunktionelle Polyester und Epoxidharze auf Basis Bisphenol A und Epichlorhydrin enthalten, zu stärkerer Vergilbung des gehärteten Pulverlackfilmes im Vergleich zu Pulverlackfilmen, die in elektrisch geheizten Oefen gehärtet werden.

Ziel der vorliegenden Erfindung ist es, diesen Nachteil der geringeren Stabilität von Pulverlacken, die als Bindemittel carboxylfunktionelle Polyester und Epoxidharze auf Basis Bisphenol A und Epichlorhydrin enthalten, in direkt gas- und/oder ölbeheizten Oefen zu beseitigen und einen entsprechenden Pulverlack und ein Verfahren zu dessen Herstellung vorzuschlagen.

Diese Aufgabe wird durch die Merkmale des Anspruchs 1 in bezug auf den Pulverlack und durch die Merkmale des Anspruchs 4 in bezug auf das Verfahren gelöst. Die Unteransprüche zeigen vorteilhafte Weiterbildungen auf.

Überraschenderweise zeigte sich, daß durch den Zusatz der Verbindungen (c) nach Anspruch 1 der geringeren Vergilbungsstabilität in direkt gas- und/oder ölbeheizten Oefen beseitigt werden kann.

Bei den Verbindungen (c) handelt es sich um Hydrochinon, Toluhydrochinon Trimethylhydrochinon und Mono.tert.-Butylhydrochinon.

Geeignete carboxylfunktionlle Polyester können nach den für Polyestern bekannten Kondensationsverfahren (Veresterung und/oder Umesterung) nach Stand der Technik hergestellt werden. Auch geeignete Katalysatoren, wie z.B. Dibutylzinnoxid oder Titantetrabutylat, können gegebenfalls verwendet werden.

Carboxylfunktionelle Copolyester enthalten als Säurekomponenten hauptsächlich aromatische mehrbasische Carbonsäuren, wie z.B. Terephthalsäure, Isophthalsäure, Phthalsäure, Pyromellithsäure, Trimellithsäure, 3,6-Dichlorphthalsäure, Tetrachlorphthalsäure und - soweit verfügbar - deren Anhydrid, Chlorid oder Ester. Meistens enthalten sie mindestens 50 Mol-% Terephthalsäure und/oder Isophthalsäure, bevorzugt 80 Mol-%. Der Rest der Säuren (Differenz zu 100 Mol-%) besteht aus aliphatischen und/oder cycloaliphatischen mehrbasischen Säuren, wie z.B. 1,4-Cyclohexandicarbonsäure, Tetrahydrophthalsäure, Hexahydroendomethylenterephthalsäure, Hexachlorophthalsäure, Azelainsäure, Sebazinsäure, Decandicarbonsäure, Adipinsäure, Dodecandicarbonsäure, Bernsteinsäure, Maleinsäure oder dimere Fettsäuren. Hydroxycarbonsäuren und/oder Lactone, wie z.B. 12-Hydroxystearinsäure, Epsilon-Caprolacton oder Hydroxypivalinsäureester des Neopentylglykols, können ebenfalls verwendet werden.

In geringen Mengen kommen auch Monocarbonsäuren, wie z.B. Benzoesäure, Tertiärbutylbenzoesäure, Hexahydrobenzoesäure und gesättigte aliphatische Monocarbonsäuren, zum Einsatz.

Als geeignete Alkoholkomponenten seien aliphatische Diole genannt, wie z.B. Ethylenglykol, 1,3-Propandiol, 1,2-Propandiol, 1,2-Butandiol, 1,3-Butandiol, 1,4-Butandiol, 2,2-Dimethyl-propandiol-1,3 (Neopentylglykol), 2,5-Hexandiol, 1,6-Hexandiol, 2,2-[Bis-(4-hydroxycyclohexyl)]propan, 1,4-Dimethylolcyclohexan, Diethylenglykol, Dipropylenglykol und 2,2-Bis-[4-(2-hydroxy)]phenylpropan. In geringeren Mengen kommen auch Polyole zum Einsatz, wie z.B. Glycerol, Hexantriol, Pentaeryltritol, Sorbitol, Trimethylolethan, Trimethylolpropan und Tris(2-hydroxy)isocyanurat.

Auch Epoxidverbindungen können anstelle von Diolen oder Polyolen verwendet werden. Bevorzugt beträgt der Anteil an Neopentylglykol und/oder Propylenglykol in der Alkoholkomponente mindestens 50 Mol-%, bezogen auf Gesamtsäuren.

Die verwendeten Epoxidharze auf Basis Bisphenol A und Epichlorhydrin sind z.B. Diglycidylether des Bisphenol A und dessen höhere Additionsprodukte. In Betracht kommen verschiedene kommerziell erhältliche Epoxidharze wie z.B. Grilonit-Harze® der EMS-Chemie AG, Epikote-Harze® von Shell, Araldit-Harze® von Ciba und DER-Harze® von Dow Chem. Corp. In der Regel haben diese Harze ein durchschnittliches Molekulargewicht zwischen 300 und 4000 und ein Epoxidequivalentgewicht zwischen 150 und 2000 (g/Equiv.).

Das Equivalentverhältnis von Epoxidequivalenten zu Carbonsäureequivalenten liegt im Bereich von 0.6 bis 1.2, bevorzugt 0,8 bis 1,2.

Der Anteil der Verbindungen (c) nach Anspruch 1 liegt bezogen auf die Gesamtmasse zwischen 0,001 Gew.-% und 10 Gew.-%, bevorzugt zwischen 0,01 und 5 Gew.-%.

Die Erfindung betrifft weiterhin ein Verfahren zur Herstellung von Pulverlacken.

Für die Herstellung der Pulverlacke können dabei die üblichen Pigmente und/oder Füllstoffe und/oder Additive verwendet werden.

Dabei handelt es sich um Additive aus der Gruppe Beschleuniger, Verlauf- und Entgasungsmittel, Hitze-, UV- und/oder HALS-Stabilisatoren und/oder Triboadditive sowie erforderlicherweise um Mattierungsmittel, wie z.B. Wachse.

Die Herstellung von Pulverlacken erfolgt vorzugsweise in der Schmelze durch gemeinsame Extrusion sämtlicher Formulierungsbestandteile bei Temperaturen zwischen 60 bis 140 °C. Das Extrudat wird anschliessend abgekühlt, gemahlen und auf eine Korngrösse kleiner als 90 µm abgesiebt. Grundsätzlich sind auch andere Verfahren zur Herstellung der Pulverlacke geeignet, wie z.B. Vermischen der Formulierungsbestandteile in Lösung und anschliessende Ausfällung oder destillative Entfernung der Lösemittel.

Die Applikation der erfindungsgemässen Pulverlacke erfolgt nach den für Pulverlacke üblichen Verfahren, z.B. mittels elektrostatischer Sprühvorrichtungen (Corona oder Tribo) oder nach dem Wirbelbett-Verfahren.

Die Vergilbungsbeständigkeitsprüfung im Labor erfolgt derart, dass in einem Elektroofen die mit Pulverlack beschichteten Bleche gehärtet werden, wobei eine Mischung, bestehend aus Natriumnitit und 30%-iger Essigsäure, als Lieferant für nitrose Gase dient. Anschliessend werden die Farbänderungen des Pulverlackfilmes gegenüber einem Pulverlackfilm, der nur im Elektroofen ohne nitrose Gase gehärtet wurde, mit einem LAB-System bestimmt.

### Vergleichsbeispiel

291.25 g Grilesta P 7224 (carboxylfunktioneller Copolyester der Fa. UCB (B), mit einer Säurezahl von ca. 70 [mgKOH/g] und einem Tg von ca. 60 °C), 291.25 g Grilonit L 1203.5 (Epoxidharz auf Basis Bisphenol A mit einem Epoxidequivalentgewicht von ca. 800 [g/ Equiv.] der Fa. EMS-Chemie AG (CH)), 400 g Kronos Cl 2160 (TiO2 der Fa. Kronos (D)), 7 g Resiflow PV 88 (Verlaufmittel auf Polyacrylat-Basis, Handelsprodukt der Fa. Worleè-Chemie GmbH), 7.5 g Irgafos PEPQ (phosphithaltiger Hitzestabilisator der Fa. Ciba (CH)) und 3 g Benzoin werden in einem Henschelmischer bei 700 Upm während 30 sec trokken gemischt und anschliessend auf einem Buss-Co-Kneter (PLK 46) bei einer Manteltemperatur von 100 °C, gekühlter Schnecke und einer Schneckenumdrehung von 150 Upm extrudiert. Das Extrudat wird gekühlt, gemahlen und auf kleiner als 90 µm abgesiebt.

Die Pulverlacke werden elektrostatisch (Corona-oder Tribo) auf Aluminiumbleche (Q-panel AL-36 5005 H 14/08 (0.8mm)) appliziert und bei einer Einbrenntemperatur von 180 °C und einer Einbrennzeit von 30 min im Elektroofen UT 6060 der Fa. Haereus, der kurz bevor die beschichteten Aluminiumbleche hineingebracht werden, mit einem Gemisch von 0.5 g Natriumnitrit und 1.25 g einer 30 %-igen Essigsäure bestückt wurde, ausgehärtet. Als Referenz wird in demselben Elektroofen bei denselben Einbrennbedingungen ohne nitrose Gase gehärtet und die Farbänderung mit dem Farbmessgerät Colorpen der Fa. Dr. Lange (D) bestimmt. Die Schichtdicke beträgt ca. 60 µm.

### Tabelle 1 zeigt die Vergilbungseigenschaften.

### Beispiel 1

288.75 g Grilesta P 7224 (carboxylfunktioneller Copolyester der Fa. UCB (B) mit einer Säurezahl von ca. 70 [mgKOH/g] und einem Tg von ca. 60 °C),
288.75 g Grilonit L 1203.5 (Epoxidharz auf Basis Bisphenol A mit einem Epoxidequivalentgewicht von ca.
800 [g/ Equiv.] der Fa. EMS-Chemie AG (CH)),
5.0 g Mono-tert.-Butylhydrochinon,
400 g Kronos Cl 2160 (TiO2 der Fa. Kronos (D)),
7 g Resiflow PV 88 (Verlaufmittel auf Polyacrylat-Basis, Handelsprodukt der Fa. Worlee-Chemie GmbH),
7.5 g Irgafos PEPQ (phosphithaltiger Hitzestabilisator der Fa. Ciba (CH)) und 3 g Benzoin werden analog dem Vergleichsbeispiel zu Pulverlack verarbeitet und geprüft.

**Tabelle 1**

| | Weissgrad nach Berger/ Elektroofen | Weissgrad nach Berger/ Elektroofen und nitrose Gase | Farbdifferenz delta E Elektroofen und nitrose Gase/Elektroofen |
|---|---|---|---|
| Vergleichsbeispiel | 85 | 64 | 4.0 |
| Beispiel 1 | 85 | 78 | 1.6 |

## Patentansprüche

1. Wärmehärtende Beschichtungsmasse bestehend aus
(A) einem carboxylfunktionellem Polyester, hergestellt durch eine Kondensationsreaktion aus aliphatischen und/oder cycloaliphatischen Polyolen mit aliphatischen und/oder cycloaliphatischen und/oder aromatischen Polycarbonsäure und Anhydriden, wobei der Polyester einen Tg im Bereich von 30 °C bis 80 °C und eine Säurezahl von etwa 20 bis 100 [mg KOH/g] aufweist, und
(B) einem Epoxidharz auf Basis von Bisphenol A und Epichlorhydrin, wobei das Equivalentverhältnis von Epoxidequivalenten zu Carbonsäureequivalenten im Bereich von 0.6 bis 1.2 liegt, und
(C) mindestens einer der Verbindungen Hydrochinon, Toluhydrochinon, Trimethylhydrochinon und Mono-tert.-Butylhydrochinon.

2. Wärmehärtbare Beschichtungsmassen nach Anspruch 1,
**dadurch gekennzeichnet, dass** der Anteil der Verbindungen (I) bis (X), bezogen auf die Gesamtmasse zwischen 0.001 Gew.-% und 10 Gew.-% bevorzugt zwischen 0.01 und 5 Gew.-% beträgt.

3. Wärmehärtbare Beschichtungsmassen nach Anspruche 1 oder 2,
**dadurch gekennzeichnet, daß** das Epoxidharz auf Basis Bisphenol A und Epichlorhydrin ein höheres Addukt des Diglycidylethers von Bisphenol A ist mit einem durchschnittlichen Molekulargewicht zwischen 300 und 4000 und einem Epoxidezivalentgewicht zwischen 150 und 2000 [g/Equiv.].

4. Verfahren zu Herstellung von Pulverlacken, mit carboxylfunktionellem Polyester und einem Epoxidharz auf Basis von Bisphenol A und Epichlorhydrin,
**dadurch gekennzeichnet,**
**daß** man in der Schmelze durch gemeinsame Extrusion sämtlicher Formulierungsbestandteile der Beschichtungsmassen nach mindestens einem der Ansprüche 1 bis 3 sowie zusätzlich übliche Pigmente und/oder Füllstoffe und/oder Additive bei Temperaturen zwischen 60 und 140 °C ein Extrudat herstellt, dieses anschliessend abkühlt, mahlt und auf eine Korngrösse von < 90 µm absiebt.

5. Verwendung der Beschichtungsmassen nach einem der Ansprüche 1 bis 3 als Schutzschichten.

## Claims

1. Heat-curable coating composition, consisting of
(A) a carboxyl-functional polyester, manufactured by a condensation reaction of aliphatic and/or cycloaliphatic polyoles with aliphatic and/or cycloaliphatic and/or aromatic polycarbon acid and anhydrides, whereby the polyester incorporates a Tg within the range of 30°C to 80°C and an acid count of approx. 20 to 100 [mg KOH/g], and
(B) an epoxy resin on the base of bisphenol A and epichlorhydrin, whereby the equivalence ratio of epoxy equivalents to carbon acid equivalents lies within a range of 0.6 to 1.2, and
(C) at least one of the compounds according to Claim 3.

2. Heat-curable coating composition according to Claim 1, **characterised in that** the quantity of the compounds (I) to (X) in relation to the total mass consists of between 0.001 wt. % and 10 wt. %, and preferably between 0.01 and 5 wt. % of hydrochinon, toluhydrochinon, trimethylhydrochinon, and mono-tert.-butylhydrochinon.

3. Heat-curable coating composition according to Claim 1 or 2, **characterised in that** the epoxy resin on the base of bisphenol A and epichlorhydrin represents a higher adduct of the diglycidylether of bisphenol A, with an average molecular weight of between 300 and 4000 and an epoxy-equivalent weight of between 150 and 2000 [g/Equiv.].

4. Method for the producing of powder lacquers with carboxyl-functional polyester and an epoxy resin on a base of bisphenol A and epichlorhydrin, **characterised in that** an extrudant according to at least one of the preceding Claims 1 to 3 is produced within the smelt through a joint extrusion of all formula components of the coating composition, using normal pigments and/or fillers and/or additives at temperatures of between 60 and 140°, whereafter the same is cooled , ground, and sieved to a grain size of <90µm.

5. Application of the coating composition according to one of the preceding Claims 1 to 3 as a protective layer.

## Revendications

1. Composition de revêtement thermodurcissable se composant de :
(A) un polyester à fonction carboxyle, préparé par une réaction de condensation de polyols aliphatiques et/ou cycloaliphatiques, avec des polyacides carboxyliques et anhydrides aliphatiques et/ou cycloaliphatiques et/ou aromatiques, le polyester présentant une Tg située dans l'intervalle allant de 30°C à 80°C et un indice d'acide d'environ 20 à 100 (mg KOH/g), et
(B) une résine époxyde à base de bisphénol A et d'épichlorhydrine, où le rapport des équivalents époxyde aux équivalents acide carboxylique se situe dans l'intervalle allant de 0,6 à 1,2, et
(C) au moins un des composés hydroquinone, toluhydroquinone, triméthylhydroquinone et mono-t-butylhydroquinone.

2. Compositions de revêtement thermodurcissables selon la revendication 1, **caractérisées en ce que** la quantité des composés (I) à (X), sur base de la composition totale, se situe dans l'intervalle allant de 0,001% en poids à 10% en poids, de préférence de 0,01 à 5% en poids.

3. Compositions de revêtement thermodurcissables selon la revendication 1 ou 2, **caractérisées en ce que** la résine époxyde à base de bisphénol A et d'épichlorhydrine est un adduit supérieur du diglycidyléther du bisphénol A, avec un poids moléculaire moyen allant de 300 à 4000 et un poids en équivalents époxyde allant de 150 à 2000 (g/équivalent).

4. Procédé de préparation de laques en poudre, avec un polyester à fonction carboxyle et une résine époxyde à base de bisphénol A et d'épichlorhydrine, **caractérisé en ce que** l'on prépare un extrudât dans la masse fondue par extrusion commune de tous les constituants de formulation des compositions de revêtement selon au moins l'une des revendications 1 à 3, ainsi que les pigments et/ou charges et/ou additifs usuels supplémentaires, à une température comprise entre 60 et 140°C, celui-ci étant ensuite refroidi, broyé et tamisé à une taille des grains < 90 µm.

5. Utilisation des compositions de revêtement selon au moins l'une des revendications 1 à 3, comme couches protectrices.
